**Europäisches Patentamt**

**European Patent Office**

**Office européen des brevets**

(19)

(11) Veröffentlichungsnummer : **0 445 336 B1**

(12) **EUROPÄISCHE PATENTSCHRIFT**

(45) Veröffentlichungstag der Patentschrift :
**18.01.95 Patentblatt 95/03**

(51) Int. Cl.⁶ : **H04N 5/44**

(21) Anmeldenummer : **90104483.4**

(22) Anmeldetag : **09.03.90**

(54) **Verfahren und Vorrichtung zur Reduktion des Kantenflackerns eines Fernsehbildes.**

(43) Veröffentlichungstag der Anmeldung :
**11.09.91 Patentblatt 91/37**

(45) Bekanntmachung des Hinweises auf die
Patenterteilung :
**18.01.95 Patentblatt 95/03**

(84) Benannte Vertragsstaaten :
**DE FR GB IT NL**

(56) Entgegenhaltungen :
**EP-A- 0 305 017**
**EP-A- 0 318 760**

(73) Patentinhaber : **Deutsche ITT Industries GmbH
Hans-Bunte-Strasse 19
D-79108 Freiburg (DE)**

(72) Erfinder : **Flamm, Peter, Dipl.-Ing. (FH)
Hinterhöfen 9
D-7806 March-Buchheim (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 445 336 B1

## Beschreibung

Die Erfindung betrifft ein Verfahren zur Reduktion des Kantenflackerns eines Fernsehbildes, bei dem ein alle ungeradzahligen Zeilen eines Vollbildes enthaltendes erstes Halbbild und ein alle geradzahligen Zeilen eines Vollbildes enthaltendes zweites Halbbild mit einer gegenüber der Vertikalfrequenz der einzelnen Halbbilder doppelt so hohen Rasterfrequenz in einem vertikal-zeitlichen Abtastraster der Halbbildsequenz primäres erstes Halbbild, sekundäres erstes Halbbild, sekundäres zweites Halbbild und primäres zweites Halbbild auf einem Bildschirm des Fernsehempfängers dargestellt werden, sowie eine Vorrichtung zur Durchführung des Verfahrens.

Ein derartiges Verfahren ist aus der Literaturstelle, "IEEE Transactions on Consumer Electronics", Band. CE-31, Nr. 4, November 1985, Seiten 627-641, Autor H. Schröder et al.: "Scanning Modes for Flicker-Free Colour TV-Reproduction" bekannt. Dadurch soll eine Reduktion der bei einer Standard-Wiedergabe eines Fernsehbilds gemäß der CCIR-Norm auftretenden Flimmerstörungen erreicht werden. Das mit einer Vertikalfrequenz von 50Hz arbeitende Standard-Wiedergabeverfahren bringt aufgrund der daraus resultierenden Bildwechselfrequenz von 25Hz ein Flimmern bei der Bildwiedergabe von hellen Flächen (Großflächenflimmern) und an horizontal orientierten Übergängen mit hohem Bildkontrast (Kantenflackern) mit sich. Die bei dem bekannten Verfahren vorgesehene Wiedergabe der einzelnen Halbbilder mit einer Rasterfrequenz von 100Hz führt zwar dazu, daß das Großflächenflimmern reduziert wird. Die bei dem bekannten Verfahren vorgesehene Erhöhung der Rasterfrequenz von 50Hz auf 100Hz eliminiert bzw. reduziert jedoch nicht das Kantenflackern, das unverändert - wie bei der Standard-Wiedergabe eines Fernsehbildes gemäß der CCIR-Norm - mit einer das menschliche Auge stark irritierenden Flackerfrequenz von 25Hz auftritt. Das beim HDTV-Empfänger vorgesehene vertikal-- zeitliche Abtastraster der zeitlichen Halbbildsequenz - primäres erstes Halbbild A, sekundäres erstes Halbbild A′, sekundäres zweites Halbbild B′, primäres zweites Halbbild B (= AA′B′B-Zyklus = 100Hz-Zwischenzeilenverfahren = 100Hz-Interlace-Verfahren) - führt dazu, daß die Amplitude des Kantenflakkerns zwei Zeilen beträgt. Dies führt in nachteiliger Art und Weise zu einer Verschlechterung der vertikalen Auflösung des Fernsehbildes.

Bei einem aus der Literaturstelle: "Rundfunktechnische Mitteilungen", Jahrgang 25, 1981, Heft 6, Seiten 264-269, Autor U. Kraus: "Vermeidung des Großflächenflimmerns in Fernseh-Heimempfängern" bekannten Verfahren wird mit einer einfachen Wiederholung der beiden zu einem Vollbild gehörenden Halbbilder gearbeitet. Das erste Halbbild wird zweimal hintereinander mit einer Rasterfrequenz von 100Hz auf dem Bildschirm des Fernsehempfängers dargestellt. Anschließend wird das zweite Halbbild zweimal auf dem Bildschirm geschrieben. Dieses Verfahren bewirkt, daß das Kantenflackern auf 50Hz erhöht wird und dadurch aufgrund der Nachfiltercharakteristik des menschlichen Auges nicht mehr wahrnehmbar ist. Dieses bekannte Verfahren besitzt jedoch den Nachteil, daß eine derartige Wiederholung der beiden Halbbilder eines Vollbildes zu einer falschen Zuordnung der Bewegungsphasen führt, wodurch Bewegungsstörungen auftreten, welche die Auflösung des Fernsehbildes drastisch verschlechtern. Das bekannte Verfahren arbeitet nur bei der Wiedergabe von Standbildern, insbesondere bei der Wiedergabe von Schriftzeichen, einigermaßen zufriedenstellend. Es eignet sich aber nicht zur Darstellung von bewegten Details in laufenden Fernsehbildern.

Aus EP O 305 017 A2 ist ein Fernsehempfänger mit doppelter Bildwiedergabefrequenz bekannt, der zur Vermeidung des von horizontal liegenden Bildübergängen verursachten Kantenflackerns die Lage des Leuchtflecks auf dem Bildschirm in vertikaler Richtung etwa um einen Zeilenabstand im Bereich des störenden Bildübergangs verändert. Diese modifizierten Bereiche einer Wiedergabezeile liegen somit oberhalb oder unterhalb der Zeilenposition, die durch das Zeilenraster des zugehörigen Halbbildes fest vorgegeben ist. Diese Korrektur führt in den korrigierten Bildbereichen zu einem engeren oder weiteren Zeilenabstand. Die Steuerschaltung wertet für die Strahlsteuerung vertikale Signalsprünge zwischen mindestens zwei benachbarten Zeilen eines einzigen Halbbildes und eines um eine Halbbilddauer verzögerten Halbbildes aus.

Außerdem ist ein bewegungsadaptives Verfahren bekannt, vergleiche hierzu "ntz-Archiv", Band 7, Heft 9, 1985 Seiten 219-229, Autor Ch. Hentschel: "Flimmerreduktionsverfahren zur Verbesserung der Fernseh-Bildwiedergabe", bei dem ein erstes und ein zweites Halbbild eines Vollbildes in einem Speicher des Fernsehempfängers zwischengespeichert werden. Hierbei ist ein Bewegungsdetektor vorgesehen, der eine oder mehrere Teilflächen des ersten Halbbildes sowie diesen Teilflächen entsprechenden Teilflächen des zweiten Halbbildes erfaßt. Aus der zeitlichen und/oder der vertikalen Änderung der in den zugeordneten Teilflächen auftretenden Bildsignale werden Interpolationskoeffizienten berechnet, mittels derer eine gewichtete Überlagerung einander zugeordneter Zeilen des ersten und des zweiten Halbbildes erfolgt. Dieses Verfahren besitzt den Nachteil, daß die vertikale Auflösung des Fernsehbildes aufgrund der gewichteten Mischung entsprechender Zeilen des ersten und des zweiten Halbbildes reduziert wird. Die Vermischung der Bildinformation zweier zeitlich aufeinanderfolgender Halbbilder führt zu Bewegungsunschärfen im Fernsehbild. Außerdem ist die zur Durchführung dieses bekannten Verfahrens erforderliche Vorrichtung äußerst aufwendig aufgebaut und teuer

2

in der Herstellung. Dieses bekannte Verfahren ist daher zum Einsatz bei Heimempfängern nicht geeignet, da sich der Kaufpreis eines nach einem derartigen Verfahren arbeitenden bzw. mit einer Vorrichtung zur Ausführung dieses Verfahrens ausgerüsteten Heimempfänger drastisch erhöhen würde.

Zur Vermeidung der o.g. Nachteile stellt sich die Erfindung die Aufgabe, ein Verfahren der eingangs genannten Art sowie eine entsprechende vorrichtung derart weiterzubilden, daß in besonders einfacher Art und Weise eine Reduktion des Kantenflackerns erreicht wird. Außerdem soll gewährleistet sein, daß die vertikale Auflösung des Fernsehbildes nicht verschlechtert wird und daß das Großflächenflimmern nicht auftritt.

Die Aufgabe wird ausgehend von dem bekannten verfahren der eingangs genannten Art erfindungsgemäß dadurch gelöst, daß zur Korrektur des Kantenflackerns entsprechend den Korrekturwerten der Helligkeitswert jedes Bildpunktes (Pixels) in jedem Halbbild an den Helligkeitswert des unmittlebar im gleichen Halbbild benachbarten oberen oder unteren Bildpunktes (Pixels) angeglichen wird.

Die erfindungsgemäße vorrichtung zur Durchführung dieses verfahrens ist im Anspruch 8 beansprucht.

Die erfindungsgemäßen Maßnahmen besitzen den Vorteil, daß der zur Detektion des Kantenflackerns herangezogene zeilenweise Vergleich zweier vertikal aufeinanderfolgender Zeilen zweier zeitlich aufeinanderfolgender Halbbilder besonders einfach erlaubt, horizontal orientierte Übergänge mit hohem Bildkontrast hochauflösend festzustellen. Außerdem ist kein kompliziert aufgebauter und aufwendiger Bewegungsdetektor zur Erfassung der Luminanzunterschiede zugeordneter Teilbereiche zweier aufeinanderfolgender Halbbilder erforderlich. Die erfindungsgemäße Korrektur des Kantenflackerns innerhalb nur eines einzigen Halbbildes bewirkt, daß keine Bewegungsunschärfen auftreten können. Die vertikale Auflösung des Fernsehbildes wird durch die Korrekturmaßnahmen nicht verschlechtert.

Vorteilhafte Weiterbildungen der Erfindung ergeben sich aus den Unteransprüchen.

Nähere Einzelheiten der Erfindung sind der nachfolgenden Beschreibung zu entnehmen, die anhand der Zeichnungen durchgeführt wird. Es zeigen:

Figuren 1a-1f:    schematische Darstellungen des bekannten und des erfindungsgemäßen Verfahrens, wobei die Figuren 1a und 1b einen Kontrastsprung bei bekannten Verfahren zur Flimmerreduktion 2 zeigen;

Figur 2a:    ein erstes Ausführungsbeispiel der Vorrichtung zur Durchführung des Verfahrens;

Figur 2b:    eine schematische Darstellung des zeitlichen Ablaufs der Signalverarbeitung des ersten Ausführungsbeispiels;

Figur 3a:    ein zweites Ausführungsbeispiel der Vorrichtung;

Figur 3b:    eine schematische Darstellung des zeitlichen Ablaufs der Signalverarbeitung des zweiten Ausführungsbeispiels;

Figur 4a:    ein drittes, bevorzugtes Ausführungsbeispiel der Vorrichtung;

Figur 4b:    eine schematische Darstellung des zeitlichen Ablaufs der Signalverarbeitung des dritten Ausführungsbeispiels;

Figuren 5 & 6:    zwei Ausführungsbeispiele eines Detektors zur Erfassung eines Signalsprungs in zwei aufeinanderfolgenden Halbbildern, und

Figur 7:    eine Korrektureinrichtung zur linearen Interpolation.

Das Verfahren zur Reduktion von Flimmerstörungen bei der Bildwiedergabe soll anhand eines einfachen Fernsehbildes erläutert werden. Es wird angenommen, daß in dem wiederzugebenden Fernsehbild nur zwei monochrome Flächen dargestellt sind. Der obere Teil des Fernsehbildes soll aus einer monochromen weißen Fläche und der untere Teil aus einer monochromen schwarzen Fläche bestehen. An der horizontalen Übergangslinie zwischen den beiden Teilflächen tritt ein hoher Kontrastunterschied auf, der zu einem störenden Flackern dieser Übergangskante führt (Kantenflackern). Diese Annahme erlaubt trotz ihrer äußerst einfachen Konzeption die Erläuterung aller wesentlichen Details des Verfahrens und stellt keine Beschränkung der Allgemeinheit der folgenden Überlegungen dar.

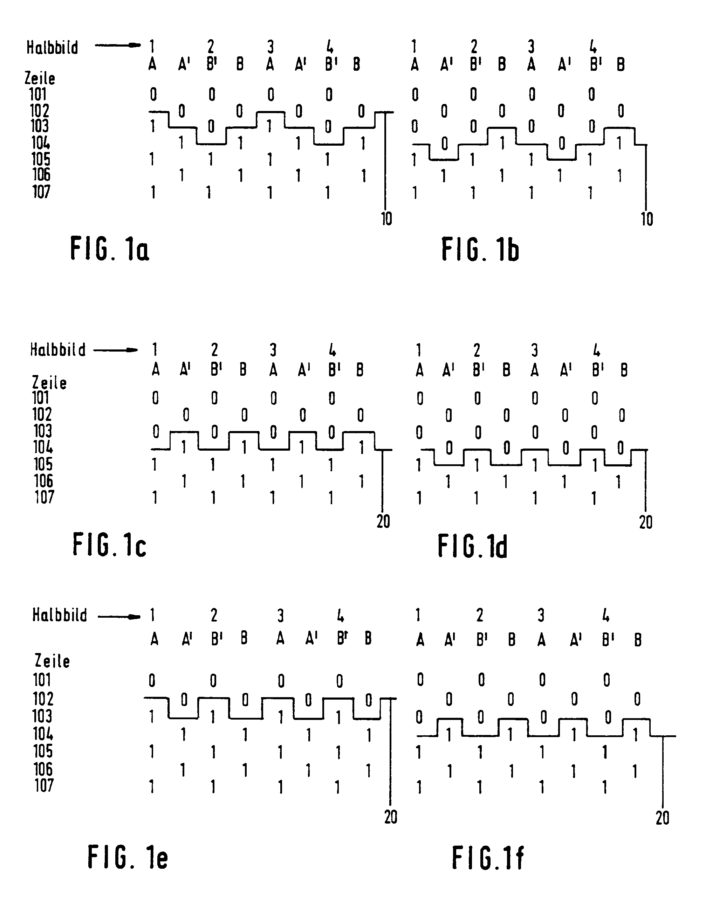

In den Figuren 1a bis 1f ist die empfängerseitige Wiedergabe eines aus einem ersten Halbbild A und einem zweiten Halbbild B bestehenden Vollbildes dargestellt, wobei zur Reduktion der Flackerstörung die Halbbildsequenz A, A′, B′, B gewählt wird. Die Figuren 1a und 1b zeigen das bekannte Zwischenbildverfahren (= Zeilensprung- oder Interlace-Verfahren) zur Flackerreduktion. Die Figuren 1c bis 1f stellen das demgegenüber verbesserte Verfahren nach der Erfindung dar. Im ersten Halbbild A werden die ein erstes Zeilenraster definierenden Zeilen 1, 3,..., 101, 103, 105, ...,625 und im zweiten Halbbild B die im zweiten Zeilenraster enthaltenen Zeilen 2, 4, 6, ..., 102, 104, 106, ..., 624 des Vollbildes übertragen. In vertikaler Richtung sind die Zeilen 101 bis 107 und in horizontaler Richtung die zeitliche Abfolge der einzelnen Halbbilder A und B dargestellt.

Der oben getroffenen Annahme wird dadurch Rechnung getragen, daß den Luminanzsignalen der die weiße Fläche repräsentierenden Zeilen die Amplitude "0" (= kleine Amplitudenwerte) bzw. den Luminanzsignalen der die schwarze Fläche darstellenden Zeilen der Wert "1" (= große Amplitudenwerte) zugeordnet wurde. Das in diesen Figuren dargestellte vertikal-zeitliche Abtastraster entsteht durch den bekannten AA′B′B-Zyklus des Zwischenbildverfahrens.

Das in einem Videospeicher des Fernsehempfängers zwischengespeicherte erste Halbbild A wird im sog. "double-scan-Modus" zuerst als primäres erstes Halbbild A im ersten Zeilenraster geschrieben. Darauf folgt die Wiedergabe des ersten Halbbildes als sekundäres Halbbild A′ im zweiten Zeilenraster des Halbbildes B. Das auf das erste Halbbild A eines Vollbildes folgende zweite Halbbild B wird zuerst als sekundäres zweites Halbbild B′ im ersten Zeilenraster des Halbbildes A und dann als primäres zweites Halbbild B im zweiten Zeilenraster geschrieben. Die Wiedergabe eines jeden primären oder sekundären Halbbildes dauert - der Rasterfrequenz von 100Hz entsprechend - 10 ms. Eine vollständige Halbbildsequenz zur Wiedergabe eines Vollbildes nimmt daher eine Zeitspanne von 40 ms ein.

Aufgrund der senderseitigen Zerlegung eines Vollbildes in zwei verschachtelte Halbbilder A, B sind zwei verschiedene Konstellationen möglich, wie ein Sprung im Luminanzsignal zwischen zwei vertikal-zeitlich (also in einem Halbbild) aufeinanderfolgenden Zeilen und somit ein zum Kantenflackern führender Kontrastunterschied an horizontal orientierten Übergängen des Fernsehbildes auftreten kann. Der Kontrastsprung kann nämlich zuerst im Halbbild A oder zuerst im Halbbild B auftreten. Die erste Alternative besteht darin, daß die Amplitude des Luminanzsignals von einer Zeile des zweiten Halbbildes B (hier: Zeile 102) zu der vertikal darauffolgenden Zeile des zeitlich folgenden ersten Halbbildes A (hier: Zeile 103) zunimmt (Signalsprung zuerst im ersten Halbbild A; siehe dazu die Fig. 1a, 1c und 1e). Als zweite Alternative ist der umgekehrte Fall denkbar: Die Amplitude des Luminanzsignals nimmt von einer Zeile des ersten Halbbildes A (hier: Zeile 103) zu der vertikal folgenden Zeile des zweiten Halbbildes B (hier: Zeile 104) zu (Signalsprung zuerst im zweiten Halbbild B; vgl. Fig. 1b, 1d und 1f).

In den Fig. 1a (Signalsprung zuerst im ersten Halbbild A) und in der Fig. 1b (Signalsprung zuerst im zweiten Halbbild B) ist die Frequenz und die Amplitude des Kantenflackern ersichtlich, wie es sich bei dem eingangs genannten, zum Stand der Technik gehörenden Verfahren ergibt. Man erkennt anhand der in den Fig. 1a und 1b enthaltenen Linie 10, daß die Übergangslinie zwischen der oberen monochromen weißen und der unteren monochromen schwarzen Fläche mit einer das menschliche Auge irritierenden Flackerfrequenz von 25 Hz flackert: Die Periodendauer des Kantenflackerns beträgt 40 ms, also die Zeitspanne einer vollständigen Halbbildsequenz A, A′, B′, B eines Vollbildes. Die Amplitude des Kantenflackerns und das damit verbundene Zeilenwandern betragen zwei Zeilen, wodurch vertikale Auflösung des Fernsehbildes beeinträchtigt wird.

In den Fig. 1c bis 1f ist anhand der Linie 20 der vertikal-zeitliche Verlauf des Kantenflackerns dargestellt, wie er sich bei der Anwendung des nachstehend beschriebenen Verfahrens nach der Erfindung ergibt. Man erkennt, daß sich die Frequenz des Kantenflackerns gegenüber dem Stand der Technik um einen Faktor 2 auf einen Frequenzwert von 50 Hz erhöht hat. Die Amplitude des Kantenflackerns beträgt nunmehr eine Zeile. Eine derartig geringfügige Bildstörung liegt aber aufgrund des geometrisch-zeitlichen Integrationseffektes des menschlichen Auges unter der Rezeptionsschwelle des Betrachters.

Der Erfindungsgedanke des Verfahrens ist wie folgt: Durch einen Vergleich des Luminanzsignals einer Zeile des ersten Halbbildes A bzw. des zweiten Halbbildes B (hier: Zeile 103 bzw. 104) mit der entsprechenden vertikal folgenden Zeile des zeitlich vorangegangenen zweiten Halbbildes B bzw. des ersten Halbbildes A (hier: Zeile 102 bzw. 103) wird festgestellt, in welchem der Halbbilder A oder B der oben erwähnte Signalsprung zuerst auftritt. Zu diesem Zweck wird aus den Luminanzsignalen der verglichenen Zeilen ein Differenzsignal gebildet, dessen Betrag und Phase direkt proportional zur Sprungamplitude ist. Aus der Phase der Sprungamplitude läßt sich unmittelbar feststellen, ob der Signalsprung im ersten Halbbild A (vgl. W2 dazu Fig. 1a) oder im zweiten Halbbild B (vgl. dazu Fig. 1b) stattfindet. Der Betrag der Sprungamplitude stellt ein Maß für die Bildkontrast-Differenz zwischen benachbarten Zeilen dar. Dieser Vergleich wird für alle Zeilen zweier zeitlich aufeinanderfolgender Halbbilder durchgeführt. Die daraus gewonnenen Differenzsignale werden in entsprechende Korrekturwerte umgesetzt, die in geeigneter Form abgespeichert werden.

Die Ermittlung der "Phase" ist insbesonders dann wichtig, wenn sich der Kontrastübergang über mehrere Zeilen erstreckt und somit eher ein kontinuierlicher Übergang anstatt eines Sprunges (wie in den Figuren 1) vorliegt. Die Angabe der Phase kann hierbei ergeben, daß der Übergang (50% - Grenze) zwischen zwei Zeilen liegt.

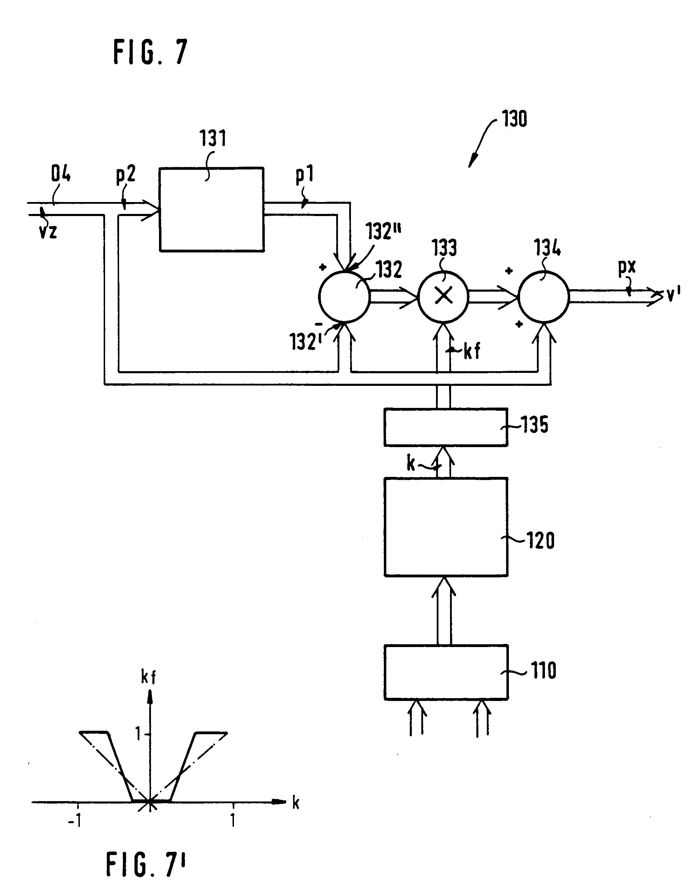

Der wesentliche Schritt des Verfahrens besteht nun darin, entweder bei einem Signalsprung im Halbbild A (B) die betreffenden Bildpunkte des primären ersten (zweiten) Halbbildes A (B) für die Wiedergabe auf dem Bildschirm an die Helligkeit der unmittelbar darüberliegenden Bildpunkte im gleichen Halbbild anzupassen (Fig. 1c und 1d), wobei jeder beliebige Zwischenwert (Interpolationswert) einstellbar ist, oder die betreffenden Bildpunkte des zeitlich darauffolgenden sekundären Halbbildes B′ (A′) für die Wiedergabe auf dem Bildschirm an die Helligkeit der unmittelbar darunterliegenden Bildpunkte im gleichen Halbbild anzupassen (Fig. 1e und 1f), wobei jeder beliebige Zwischenwert (Interpolationswert) einstellbar ist. Das jeweilige Interpolationsmaß für die Anpassung ist vom Betrag der Sprungamplitude abhängig (signaladaptive Korrektur). Hierbei ist in vorteilhafter Weise vorgesehen, daß bei einer kleinen Sprungamplitude keine derartige signaladaptive Korrektur mittels einer noch genau zu beschreibenden Korrektureinrichtung 130 (vgl. Figuren 7 und 7') stattfindet, während bei einem großen Sprung der Luminanzsignale benachbarter Zeilen - wie in dem hier angenommenen Fall - die betreffende Anpassung in vertikaler Richtung an die Bildpunkte der darunter- bzw. darüberliegenden Zeile erfolgt. Vergleiche hierzu die Bewertungsschaltung 135 in Figur 7, mit der die Sprungamplituden entsprechend einer vorgegebenen nichtlinearen Kennlinie, z.B. nach Figur 7', bewertet werden.

Wesentlich an dem Verfahren ist, daß die Detektion des Kantenflackerns durch den Vergleich zweier vertikal aufeinanderfolgender Zeilen zweier zeitlich aufeinanderfolgender Halbbilder erfolgt, wohingegen die Korrektur des Kantenflackerns durch die signaladaptive Korrektur entsprechender Zeilen innerhalb nur eines Halbbildes durchgeführt wird. Diese Maßnahmen bewirken, daß in besonders einfacher Art und Weise eine hochauflösende vertikale Detektion des Kantenflackerns erreicht wird, ohne daß man gezwungen ist, einen aufwendig konstruierten Bewegungsdetektor einzusetzen. Da bei der Korrektur des Kantenflackerns nur die Zeilen eines einzigen Halbbildes signaladaptiv korrigiert werden, tritt keine Bewegungsunschärfe auf. Dies bringt mit sich, daß die vertikale Auflösung des Fernsehbildes nicht verschlechtert wird.

Die Wirkungsweise einer derartigen signaladaptiven Anpassung in Richtung der darunterliegenden Bildpunkte des primären Halbbildes, in dem der Signalsprung stattfindet, ist aus dem Vergleich der Fig. 1a und 1c (Signalsprung im Halbbild A) bzw. der Fig. 1b und 1d (Signalsprung im Halbbild B) ersichtlich. Hierzu wird besonders auf die erste und auf die fünfte Spalte der Fig. 1a und 1c bzw. auf die vierte und achte Spalte der Fig. 1b und 1d verwiesen: Die in der Fig. 1c bzw. in der Fig. 1d dargestellten Korrektur des ersten Halbbildes A bei der Wiedergabe dieses Halbbildes als primäres erstes Halbbild A der Halbbildsequenz des vertikal-zeitlichen Abtastrasters bzw. des zweiten Halbbildes B bei der Wiedergabe dieses Halbbildes als primäres zweites Halbbild B der Halbbildsequenz des vertikal-zeitlichen Abtastrasters um - den oben getroffenen Annahmen des maximal möglichen Sprunges im Luminanzsignal von weiß auf schwarz entsprechend - den maximalen Interpolationswert (der einer vollen Zeile entspricht) bewirkt besonders einfach die Reduktion des Kantenflackerns. Die vertikale Auflösung des Fernsehbildes wird nicht beeinträchtigt, da keine Verknüpfung benachbarter Zeilen zweier aufeinanderfolgender Halbbilder stattfindet.

Die Wirkungsweise einer signaladaptiven Anpassung in Richtung der darüberliegenden Bildpunkte des sekundären Halbbildes, das dem Halbbild, in dem der Signalsprung stattgefunden hat, zeitlich folgt, ist aus dem Vergleich der Figuren 1a und 1e (Signalsprung im Halbbild A) bzw. der Figuren 1b und 1f (Signalsprung im Halbbild B) ersichtlich. Hierzu wird insbesondere auf die dritte und die siebente Spalte der Fig. 1e bzw. auf die zweite und die sechste Spalte der Fig. 1f verwiesen. Man erkennt, daß die signaladaptiv-korrigierte Wiedergabe des zweiten Halbbildes B als sekundäres zweites Halbbild B' der Halbbildsequenz des vertikal-zeitlichen Abtastrasters ein durch einen Signalsprung im ersten Halbbild A entstehendes Kantenflackern eliminiert. Analog dazu wird ein durch einen Signalsprung im zweiten Halbbild B induziertes Kantenflackern durch die signaladaptiv-korrigierte Wiedergabe des ersten Halbbildes A als sekundäres erstes Halbbild A' des vertikal-zeitlichen Abtastrasters eliminiert.

Weitere Einzelheiten des Verfahrens sind der nachfolgenden Beschreibung einer Vorrichtung zur Durchführung des Verfahrens zu entnehmen.

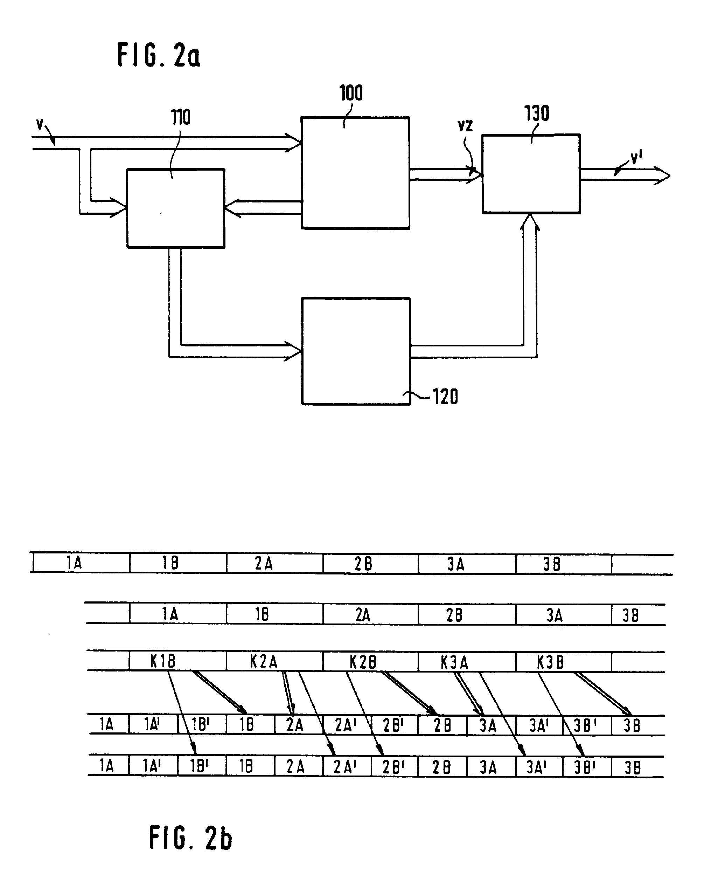

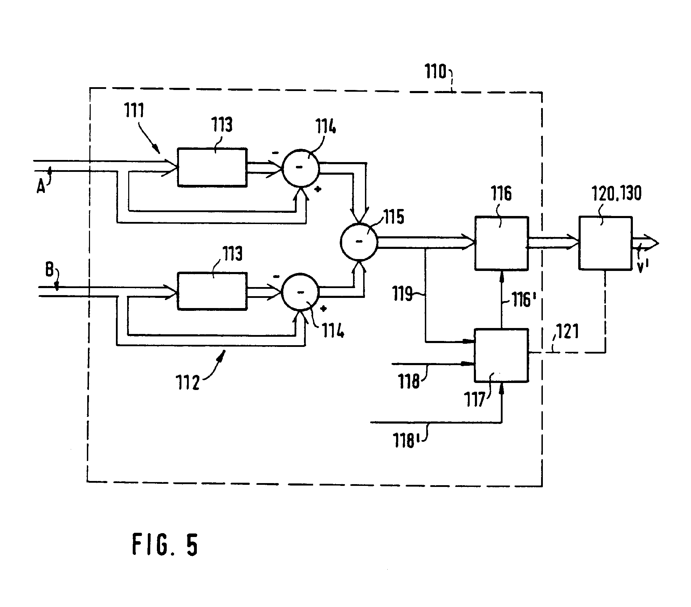

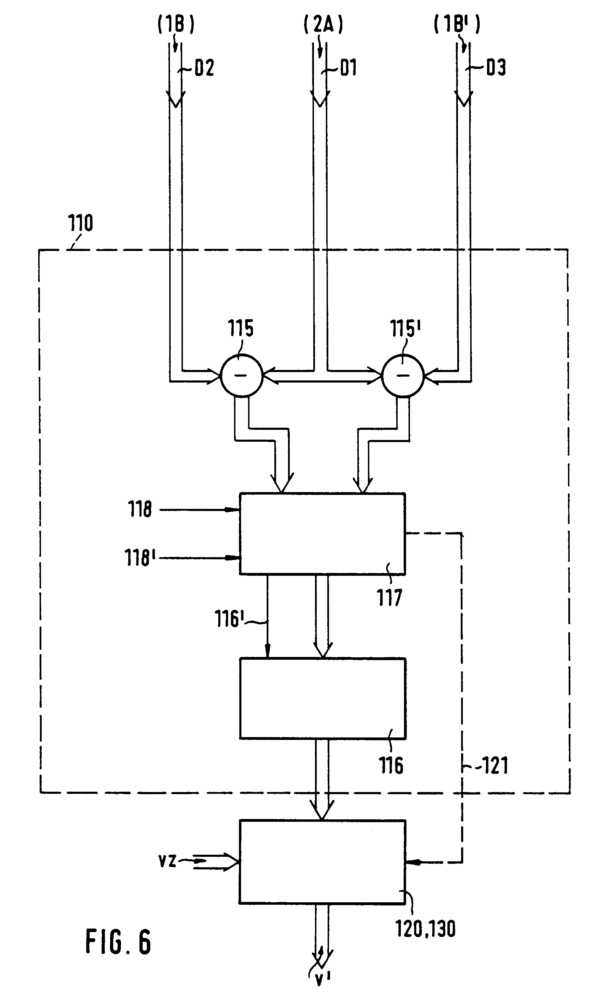

In dem in Figur 2a dargestellten ersten Ausführungsbeispiel wird ein von einem Tuner des Fernsehempfängers empfangenes, im Zeitmultiplex die ersten und die zweiten Halbbilder A und B eines jeden Vollbildes seriell enthaltendes Videosignal v nach dem Durchlaufen eines Analog-Digital-Wandlers und der bekannten Bildverarbeitungseinrichtungen des Fernsehempfängers einem Videospeicher 100 zugeführt. Die zur Signalleitung vorgesehenen Datenbusse sind in Fig. 2a und in den folgenden Figuren durch Doppelpfeile dargestellt. Ihre Funktion ist bekannt und wird deshalb nicht explizit angeführt. Das erste Halbbild A wird im Videospeicher (Video-RAM) 100 abgelegt. Noch während des Einschreibens des ersten Halbbildes A in den Videospeicher 100 wird dieser mit einer Rasterfrequenz von 100Hz ausgelesen und das primäre erste Halbbild A wird auf dem Bildschirm dargestellt. Das dem ersten Halbbild A des ersten Vollbildes folgende zweite Halbbild B des ersten Vollbildes wird gleichzeitig zum Videospeicher 100 und zu einem ersten Eingang eines Detektors 110 geführt. An einem zweiten Eingang des Detektors 110 liegt das vom Speicher 100 um ein Halbbild verzögerte erste Halbbild A des ersten Vollbildes an. Der weiter unten noch eingehend beschriebene Detektor 110 (siehe 2 Figuren 5 und 6) stellt durch den zeilenweisen Vergleich der Luminanzsignale einer Zeilen des ersten Halbbildes A und der entsprechenden vertikal-zeitlich folgenden Zeile des zweiten Halbbildes B die Sprungamplitude durch Differenzbildung der einzelnen Luminanzwerte fest.

Die vom Detektor 110 festgestellten Differenzsignale werden in entsprechende Korrekturwerte umgerechnet. Diese werden in einem RAM-Korrekturwertspeicher 120 abgespeichert. Der RAM-Korrekturwertspeicher 120 ist vom Videospeicher 100 physikalisch getrennt ausgeführt. Es ist aber auch möglich, den Videospeicher 100 derart zu dimensionieren, daß in diesem sowohl ein Halbbild als auch die vom Detektor 110 gelieferten Korrekturwerte abgelegt werden können. Die im Korrekturwertspeicher 120 zwischengespeicherten Korrekturwerte werden zu einer Korrektureinrichtung 130 (vgl. dazu Fig. 7) geleitet, an deren Ausgang das korrigierte Videosignal v' mit unterdrücktem Flächenflimmern und Kantenflackern abgreifbar ist.

Bei der beschriebenen signaladaptiven Korrektur erfolgt wie bereits beschrieben die Korrektur rein pixelweise, wobei der Helligkeitswert jedes Pixels (= Bildpunktes) an den Helligkeitswert des unmittelbar im gleichen Halbbild benachbarten oberen oder unteren Pixels, je nach dem einzeln gespeicherten Korrekturwert, angeglichen wird. Mittels der Korrektureinrichtung 130, die mit dem zugehörigen Korrekturwert aus dem Detektor 110 gespeist ist, können beliebige Zwischenwerte gebildet werden. Die im Korrekturwertspeicher 120 gespeicherten Korrekturwerte sind somit direkt auf die einzelnen Pixel bezogen und nicht auf Zeilen oder gar Halbbilder.

Der zeitliche Ablauf der in der Korrektureinrichtung 130 vollzogenen Korrektur der ersten und der zweiten Halbbilder A und B jedes Vollbildes ist schematisch in Figur 2b dargestellt. In der ersten Zeile ist schematisch die zeitliche Abfolge des ersten und des zweiten Halbbildes 1A und 1B des ersten Vollbildes sowie der ersten und der zweiten Halbbilder 2A,2'B,3A,3B des zweiten und dritten Vollbildes dargestellt, die mit einer Vertikalfrequenz von 50Hz am Eingang der Vorrichtung anliegen. Demgemäß entspricht die Länge eines Abschnittes der drei ersten Zeilen einer Zeitspanne von 20ms. Die einzelnen Abschnitte der beiden letzten Zeilen der Figur 2b repräsentieren eine Zeitspanne von 10ms. In der zweiten Zeile der Figur 2b ist die zeitliche Abfolge der am zweiten Eingang des Detektors 110 anliegenden Halbbilder dargestellt. Die dritte Zeile der Figur 2b zeigt schematisch die Abfolge der im Detektor 110 festgestellten Korrekturwerte K1B,K2A,K2B,K3A und K3B.

In der vierten Zeile wird der zeitliche Ablauf der Korrektur der betreffenden Bildpunkte durch eine signaladaptive Angleichung an die jeweils darunterliegenden Bildpunkte dargestellt. Im einzelnen ergibt sich folgendes: Durch den Vergleich des aktuellen zweiten Halbbildes 1B des ersten Vollbildes mit dem aus dem Videospeicher 100 ausgelesenen, um ein Halbbild verzögerten ersten Halbbildes 1A des ersten Vollbildes wird festgestellt, ob im zweiten Halbbild 1B ein Signalsprung auftritt. Entsprechen die im Detektor 110 gewonnenen Korrekturwerte nach Betrag und Phase diesen Voraussetzungen, so werden die betroffen Bildpunkte des zweiten Halbbildes 1B signaladaptiv an die darunterliegenden Bildpunkte desselben Halbbildes angeglichen. Ergibt der Vergleich der beiden o.g. Halbbilder jedoch, daß der Signalsprung nicht im zweiten Halbbild 1B, sondern im vorangegangenen ersten Halbbild 1A stattgefunden hat, so wird die entsprechende signaladaptive Korrektur im ersten Halbbild 1A durchgeführt; das zweite Halbbild 1B wird unverändert wiedergegeben. Der weitere Ablauf der dargestellten signaladaptiven Korrektur der Fernsehbilder zur Elimination des Kantenflackerns ist aus der Figur 2b ersichtlich und wird deshalb an dieser Stelle nicht mehr explizit aufgeführt. Der Doppelpfeil in Figur 2b deutet auf die derart zu korrigierenden ersten und zweiten Halbbilder A, B.

In der fünften Zeile der Figur 2b ist die Korrektur des Kantenflackerns durch die oben beschriebene signaladaptive Anpassung der betroffenen Bildpunkte des zeitlich folgenden, sekundären Halbbildes an die darüberliegenden Bildpunkte dieses sekundären Halbbildes dargestellt. Wird zuerst im ersten Halbbild 1A ein Signalsprung in Bezug auf das zweite Halbbild 1B festgestellt, so erfolgt eine derartige Anpassung beim sekundären zweiten Halbbild 1B'. Der weitere Verlauf der Korrekturen zur Reduktion des Kantenflackerns ist ebenfalls aus der Fig. 2b ersichtlich und wird deshalb nicht mehr explizit erläutert. Der Einfachpfeil in Figur 2b zeigt auf die derart zu korrigierenden sekundären ersten und zweiten Halbbilder A', B'.

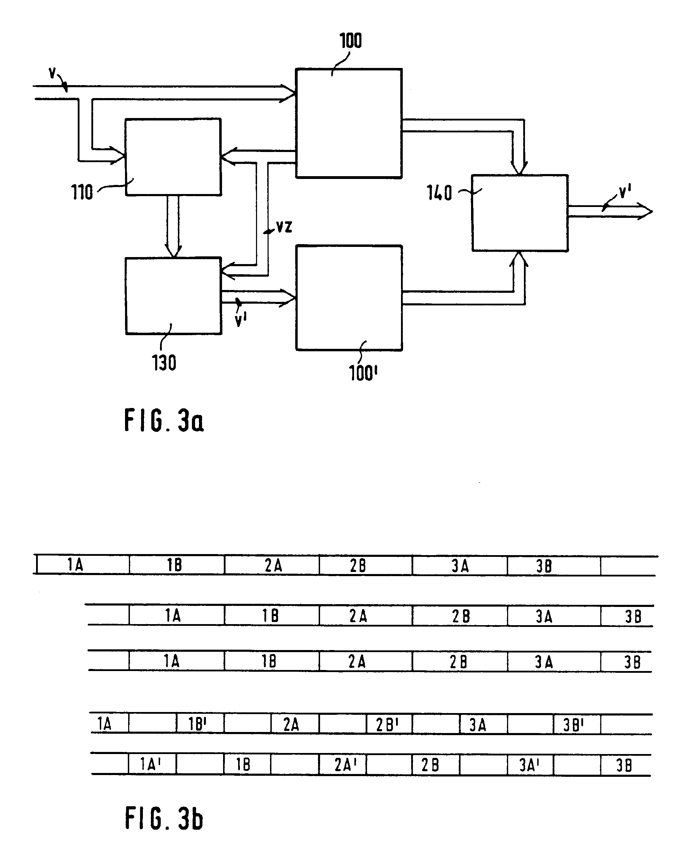

In der Fig. 3a ist ein zweites Ausführungsbeispiel einer Vorrichtung dargestellt. Diese weist außer dem ersten Videospeicher 100, dem Detektor 110 und der Korrektureinrichtung 130 noch einen weiteren Videospeicher 100' auf. Das Speichervermögen des weiteren Videospeichers 100' wird derart gewählt, daß in diesem ein halbes Halbbild gespeichert werden kann. Das im Videospeicher 100 abgespeicherte erste Halbbild A wird - zeitlich um ein Halbbild verzögert - gleichzeitig dem Detektor 110 und der Korrektureinrichtung 130 zugeführt. Im Detektor 110 erfolgt - wie oben beschrieben - die zeilenweise Feststellung der Phase und des Betrags der Sprungamplitude durch den Vergleich des um ein Halbbild verzögerten ersten Halbbildes A und des am ersten Eingang des Detektors 110 anliegenden zweiten Halbbildes B. Die vom Detektor 110 gelieferten Korrekturwerte werden in der Korrektureinrichtung 130 verarbeitet.

Der wesentliche Unterschied zwischen dem hier beschriebenen zweiten Ausführungsbeispiel und dem oben erläuterten ersten Ausführungsbeispiel besteht darin, daß die Korrekturwerte nicht in einem Korrekturwertspeicher 120 abgelegt werden. Vielmehr ist vorgesehen, daß die Korrektureinrichtung 130 die Korrekturwerte direkt mit dem aus dem Videospeicher 100 ausgelesenen und an die Korrektureinrichtung 130 geführten ersten Halbbild A verknüpft und dieses entsprechend korrigiert. Das korrigierte erste Halbbild A wird dann im weiteren Videospeicher 100' zwischengespeichert. Die im Videospeicher 100 und in dem weiteren Videospeicher 100' enthaltene Bildinformation wird mittels eines Multiplexers 140 alternierend ausgelesen.

Die zeitliche Abfolge der Verfahrensschritte ist wiederum in Fig. 3b dargestellt. Die erste Zeile zeigt die zeitliche Aufeinanderfolge der vom Fernsehempfänger empfangenen Halbbilder 1A und 1B des ersten Vollbildes und die entsprechenden ersten und zweiten Halbbilder 2A, 2B, 3A, 3B, etc. des zweiten und der weitern darauffolgenden Vollbilder. In der zweiten Zeile ist die am Detektor 110 anliegende, vom Videospeicher 100 um ein Halbbild verzögerte Signalfolge der ersten und zweiten Halbbilder dargestellt. Die dritte Zeile der Fig.

3b zeigt die im weiteren Videospeicher 100′ enthaltenen Bildinformationen. In den Zeilen 4 und 5 ist das alternierende Auslesen der signaladaptiv korrigierten Halbbilder aus dem Videospeicher 100 (Zeile 4) und aus dem weiteren Videospeicher 100′ (Zeile 5) dargestellt.

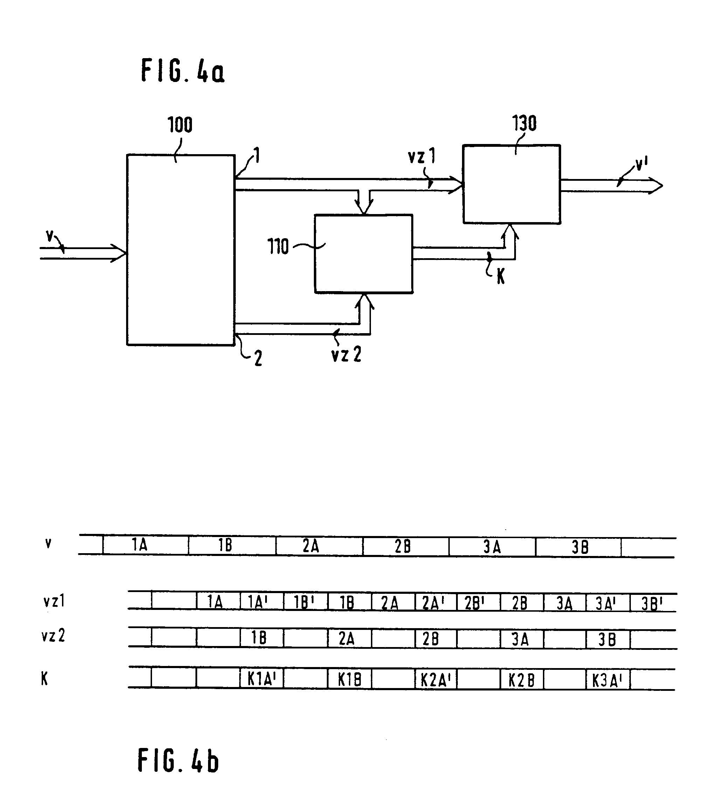

In Fig. 4a ist ein bevorzugtes drittes Ausführungsbeispiel der Vorrichtung dargestellt. Diese weist einen Videospeicher 100 auf, der derart dimensioniert ist, daß darin zwei volle Halbbilder abgespeichert werden können. Die im Videospeicher 100 aufgenommenen Halbbilder A und B werden simultan mit einer Rasterfrequenz von 100 Hz über die Ausgänge 1, 2 ausgelesen und dem Detektor 110 zugeführt. Dieser berechnet - wie beschrieben - durch den zeilenweisen Vergleich des ersten Halbbildes A und des zweiten Halbbildes B (= vz1 bzw. vz2) die Sprungamplituden und leitet die daraus bestimmten Korrekturwerte K zur Korrektureinrichtung 130. In dieser erfolgt - wie oben erläutert - die Korrektur des dem ersten Ausgang 1 entstammenden entsprechenden Halbbildes vz1. Diese Vorrichtung besitzt den Vorteil, daß die Korrekturwerte K oder das korrigierte Halbbild v′ nicht mehr zwischengespeichert werden müssen. Vielmehr wird das aus dem Videospeicher 100 ausgelesene Signal vz1 sofort nach der signaladaptiven Korrektur in der Korrektureinrichtung 130 auf dem Bildschirm geschrieben.

In Fig. 4b ist wiederum die zeitliche Abfolge der Verfahrensschritte dargestellt. Die erste Zeile v zeigt die zeitliche Abfolge der eintreffenden Halbbilder 1A, 1B, 2A, 2B, etc. In den Zeilen 2 und 3 (= vz1 bzw. vz2) ist die zeitliche Folge des Auslesevorgangs der entsprechenden Halbbilder aus dem Videospeicher 100 dargestellt. In der vierten Zeile K ist angegeben, welches der dem ersten Ausgang 1 entstammenden Halbbilder korrigiert wird.

In Figur 5 ist eine erste Ausführungsform des Detektors 110 dargestellt. An ein erstes Differenzglied 111 wird das am ersten Eingang des Detektors anliegende aktuelle Halbbild, z.B. A, geleitet. An einem zweiten Differenzglied 112 liegt das aus dem Videospeicher 100 ausgelesene und zum zweiten Eingang des Detektors 110 geleitete Halbbild, z.B. B, der beiden zu 72 vergleichenden Halbbilder A, B an. Jedes Differenzglied 111 bzw. 112 besteht aus einer Verzögerungsleitung 113 und einem Subtrahierer 114. Das am Eingang jedes Differenzgliedes anliegende Halbbild wird einmal direkt und einmal über die Verzögerungsleitung 113, die eine Verzögerung um eine Zeile bewirkt, zum Subtrahierer 114 geleitet. Durch die Subtraktion der Teilsignale der beiden Zweige des Differenzgliedes 111 bzw. 112 wird das Luminanzsignal in bekannter Art und Weise pixelweise in vertikaler Richtung gleichsam differenziert.

Die Ausgangssignale der beiden Differenzglieder 111 und 112 werden zu einem weiteren Subtrahierer 115 geleitet. In diesem erfolgt der schon mehrmals erwähnte pixelweise Vergleich des Luminanzsignals einer Zeile eines Halbbildes mit der korrespondierenden Zeile des zeitlich vorangegangenen Halbbildes. Im weiteren Subtrahierer 115 wird also das zur Detektion eines Signalsprunges wesentliche Differenzsignal gebildet.

Das Differenzsignal wird zu einer Recheneinrichtung 116 geleitet, die von einer Steuereinrichtung 117 des Detektors 110 kontrolliert wird. Hierbei ist vorgesehen, daß aus dem im weiteren Subtrahierer 115 gebildeten Differenzsignal zweier entsprechender Zeilen ein Steuersignal, z.B. die Vorzeichenstelle, ausgekoppelt wird, dessen Signalinformation die Phase des Differenzsignales enthält. Dieses wird über die Signalleitung 119 zur Steuereinrichtung 117 geleitet. Außerdem werden der Steuereinrichtung 117 über weitere Signalleitungen 118 und 118′ von einer nicht gezeigten zentralen Steuereinrichtung des Fernsehempfängers Signale zugeleitet, die Informationen über die an den Differenzgliedern 111 und 112 anliegenden Halbbilder (erstes bzw. zweites oder zweites bzw. erstes primäres Halbbild) enthalten. Die Steuereinrichtung 117 steuert über die weitere Signalleitung 116′ entsprechend des eingangs beschriebenen Verfahrensablaufes die Recheneinrichtung 116, in der die bereits beschriebenen Korrekturwerte, bspw. als Zweier-Komplement-Binärzahlen, errechnet werden. Eine Signalleitung 121 verbindet die Steuereinrichtung 117 mit dem RAM--Korrekturwertspeicher 120, in dem die von der Recheneinrichtung 116 gelieferten Korrekturwerte abgespeichert werden. Es ist aber auch möglich, daß die Steuereinrichtung 117 - wie im zweiten Ausführungsbeispiel beschrieben - direkt über die Signalleitung 121 mit der Korrektureinrichtung 130 verbunden ist. Mittels der Recheneinrichtung 116 werden die Ausgangssignale des weiteren Subtrahierens 115 ggf. in ihrem Wert invertiert, wobei die Invertierung von der jeweiligen Halbbildphase A, A′, B′, B abhängig ist.

In Figur 6 ist eine zweite Ausführungsform des Detektors 110 dargestellt, die in besonders vorteilhafter Art und Weise für den Einsatz in einer dem dritten Ausführungsbeispiel entsprechenden Vorrichtung prädestiniert ist. In dieser Figur sind die bereits aus der Figur 5 bekannten Komponenten mit gleichen Bezugszeichen versehen, weshalb diese hier nicht mehr beschrieben werden.

Der wesentliche Unterschied dieser zweiten Ausführungsform des Detektors 110 zu der vorher beschriebenen ersten Ausführungsform besteht darin, daß dem Detektor 110 gleichzeitig über die Datenbusse D1, D2, D3 das aktuelle Halbbild, ein um 313 Zeilen - also um ein Halbbild - verzögertes weiteres Halbbild und ein um 625 Zeilen - also um ein Vollbild - verzögertes drittes Halbbild zugeführt werden. Wesentlich hierbei ist, daß sich die eben gemachten Angaben über die Verzögerungszeiten auf die mit einer Rasterfrequenz von 100Hz ausgelesenen Halbbilder und nicht auf die am Eingang des Videospeichers 100 anliegenden Halbbilder mit einer Vertikalfrequenz von 50Hz beziehen.

Die Funktionsweise dieses Detektors ist aus dem in Figur 4b dargestellten zeitlichen Ablauf der Signalverarbeitung des dritten Ausführungsbeispiels ersichtlich. Dem Detektor 110 wird über den Datenbus D1 das aus dem Videospeicher 100 ausgelesene aktuell auf den Bildschirm zu schreibende Halbbild - z.B. das primäre erste Halbbild 2A des zweiten Vollbildes - zugeführt. Demzufolge liegt über dem Datenbus D2 das primäre zweite Halbbild 1B des ersten Vollbildes und über dem Datenbus D3 das sekundäre zweite Halbbild 1B' des ersten Vollbildes an. Die Steuereinrichtung 117 des Detektors 110 stellt aufgrund der von der zentralen Steuereinrichtung des Fernsehempfängers über die Signalleitungen 118 und 118' gelieferten Informationen fest, welche der drei am Detektor 110 anliegenden Halbbilder zu vergleichen sind. In dem o.g. Fall wird die Detektion des Kantenflackerns durch den Vergleich der über die Datenbusse D1 und D2 zum Detektor 110 geführten Halbbilder 2A und 1B durchgeführt. Demzufolge wird das im ersten weiteren Subtrahierer 115 aus den Luminanzsignalen gebildete Differenzsignal über einen in der Steuereinrichtung 117 enthaltenen elektronischen Datenumschalter zur Recheneinrichtung 116 geleitet. Die darin berechneten invertierten oder nicht invertierten Korrekturwerte werden einem Korrekturwertspeicher 120 oder direkt der Korrektureinrichtung 130 zugeführt.

Im darauf folgenden Verfahrensschritt werden dem Detektor 110 über die Datenbusse D1, D2 und D3 das sekundäre erste Halbbild 2A', das primäre erste Halbbild 2A und das sekundäre zweite Halbbild 1B zugeführt. Da das primäre und das sekundäre erste Halbbild 2A und 2A' eine identische Bildinformation aufweisen, muß in diesem Fall die Detektion des Kantenflackerns durch den Vergleich der an den Datenbussen D1 und D3 anliegenden Halbbilder 2A' und 1B durchgeführt werden. Die Steuereinrichtung 117 leitet in diesem Fall nur das im zweiten weiteren Subtrahierer 115' gewonnene Differenzsignal des sekundären ersten Halbbildes 2A' und des primären zweiten Halbbildes 1B zur Recheneinrichtung 116 weiter. Die weiteren Verfahrensschritte bei der Detektion des Kantenflackerns der folgenden Halbbilder ist aus den eben gemachten Ausführungen ersichtlich.

In Figur 7 ist schematisch als Blockschaltbild ein Ausführungsbeispiel der Korrektureinrichtung 130 dargestellt. Dies ist eine Schaltung zur linearen Interpolation in vertikaler Richtung. Das zu korrigierende Halbbild wird über einen Datenbus D4 zu einer Verzögerungsleitung 131, zu einem Subtrahierer 132 sowie zu einem Summierer 134 geleitet. In der Verzögerungsleitung 131 wird das Halbbild um eine Zeile verzögert und dann zu dem Minuend-Eingang 132'' des Subtrahierers 132 geleitet. Am Subtrahend-Eingang 132' des Subtrahierers 132 liegt gleichzeitig das unverzögerte Halbbild an. Durch die zeilenweise Subtraktion der am Minuend-Eingang und am Subtrahend-Eingang des Subtrahierers 132 anliegenden Luminanzsignale wird ein Differenzsignal gebildet, das zu einem Multiplizierer 133 geführt wird. In diesen wird das Differenzsignal pixelweise mit einem Korrekturfaktor kf multipliziert, der aus den entsprechenden vom Detektor 110 gewonnen Korrekturwerten k gebildet wird. Hierbei ist vorgesehen, daß die im Korrekturwertspeicher 120 abgelegten Korrekturwerte mittels einer Bewertungsschaltung 135 mit insbesondere nichtlinearer Bewertungskennlinie gewichtet werden, vgl. bspw. die Bewertungskennlinie von Figur 7'. Die strichpunktierte Linie gilt, wenn die Bewertungsschaltung 135 streng proportional arbeitet, so daß die Korrekturwerte k unverändert zum Multiplizierer 133 durchgeschaltet werden. Die einzelnen Werte der Bewertungskennlinie können bspw. als Adresseninhalte in einem Festwertspeicher (= ROM) abgelegt sein, die über die Korrekturwerte k als Adressen abrufbar sind.

Es liegt im Belieben eines Fachmannes, die zwischen 0 und 1 liegenden Korrekturfaktoren kf anhand einer vorgewählten Korrekturfunktion dem entsprechenden Einsatzzweck anzupassen. Das mit den entsprechenden Korrekturfaktoren kf multiplizierte Differenzsignal wird zu einem ersten Eingang eines Summierers 134 geleitet, an dessen zweitem Eingang das unverzögerte Halbbild anliegt. Durch eine zeilenweise Addition des im Multiplizierer 133 modifizierten Differenzsignals des Subtrahierers 132 zu einer Zeile des unverzögerten Halbbildes ist es besonders einfach möglich, die eingangs beschriebene signaladaptive Korrektur durchzuführen.

Die durch die Korrektureinrichtung 130 realisierbare lineare Interpolation px der Helligkeitswerte p1, p2 zweier vertikal benachbarter Bildpunkte innerhalb eines Halbbildes ergibt sich für das korrigierte Videosignal v' wie folgt:

$$px = p2 \cdot (1 - kf) + p1 \cdot kf$$

wobei kf zwischen 0 und 1 liegt.

**Patentansprüche**

1. Verfahren zur Reduktion des Kantenflackerns eines Fernsehbildes, bei dem ein alle ungeradzahligen Zeilen eines Vollbildes enthaltendes erstes Halbbild (A) und ein alle geradzahligen Zeilen eines Vollbildes enthaltendes zweites Halbbild (B) mit einer gegenüber der Vertikalfrequenz der einzelnen Halbbilder (A,B) doppelt so hohen Rasterfrequenz in einem vertikal-zeitlichen Abtastraster der Halbbildsequenz: primäres erstes Halbbild (A) im ersten Zeilenraster, sekundäres erstes Halbbild (A′) im zweiten Zeilenraster, sekundäres zweites Halbbild (B′) im ersten Zeilenraster und primäres zweites Halbbild (B) im zweiten Zeilenraster auf einem Bildschirm des Fernsehempfängers dargestellt werden, wobei zur Detektion des Kantenflackerns bildpunktweise das Luminanzsignal einer Zeile eines primären Halbbildes (A bzw. B) mit dem Luminanzsignal der vertikal folgenden Zeile des zeitlich folgenden primären Halbbildes (B bzw. A) verglichen wird, und aus der Differenz der Luminanzsignale dieser korrespondierenden Zeilen der beiden zeitlich aufeinanderfolgenden Halbbilder (A,B bzw. B,A) Korrekturwerte abgeleitet werden, <u>dadurch gekennzeichnet, daß</u> entsprechend den Korrekturwerten der Helligkeitswert jedes Bildpunktes (Pixels) in einem Halbbild an den Helligkeitswert des unmittelbar im gleichen Halbbild benachbarten oberen oder unteren Bildpunktes (Pixels) angeglichen wird.

2. Verfahren nach Anspruch 1, dadurch gekennzeichnet, daß bei einem Luminanzsignalsprung, der zeitlich zuerst in einer Zeile des ersten Halbbildes (A) auftritt, eine Angleichung des oder der betreffenden Bildpunkte dieser Zeile an den Helligkeitswert des oder der darunter liegenden Bildpunkte erfolgt.

3. Verfahren nach Anspruch 1, dadurch gekennzeichnet, daß bei einem Luminanzsignalsprung, der zeitlich zuerst in einer Zeile des ersten Halbbildes (A) auftritt, eine Angleichung des oder der betreffenden Bildpunkte dieser Zeile an den Helligkeitswert des oder der darüberliegenden Bildpunkte erfolgt.

4. Verfahren nach Anspruch 1, dadurch gekennzeichnet, daß bei einem Luminanzsignalsprung, der zeitlich zuerst in einer Zeile des zweiten Halbbildes (B) auftritt, eine Angleichung des oder der betreffenden Bildpunkte dieser Zeile an den Helligkeitswert des oder der darunterliegenden Bildpunkte erfolgt.

5. Verfahren nach Anspruch 1, dadurch gekennzeichnet, daß bei einem Luminanzsignalsprung, der zeitlich zuerst in einer Zeile des zweiten Halbbildes (B) auftritt, eine Angleichung des oder der betreffenden Bildpunkte dieser Zeile an den Helligkeitswert des oder der darüberliegenden Bildpunkte erfolgt.

6. Verfahren nach Anspruch 1, dadurch gekennzeichnet, daß die Korrektur der Bildpunkte in Abhängigkeit vom Betrag der Korrekturwerte (k,) derart festgelegt ist, daß bei betragsmäßig kleinen Korrekturwerten keine Korrektur stattfindet.

7. Verfahren nach Ansprüchen 1 bis 6, dadurch gekennzeichnet, daß die Korrektur durch eine Interpolation px der Luminanzwerte p1, p2 zweier vertikal benachbarter Bildpunkte innerhalb eines Halbbildes nach der folgenden Formel erfolgt:

$$px = p2 \cdot (1 - kf) + p1 \cdot kf,$$

wobei der Korrekturwert kf zwischen 0 und 1 liegt und durch eine lineare oder nichtlineare Bewertung der im Korrekturwertspeicher (120) abgespeicherten Korrekturwerte k ermittelt wird.

8. Vorrichtung zur Durchführung des Verfahrens nach Anspruch 1 mit einem Videospeicher (100), dessen Speicherkapazität derart bemessen ist, daß in diesem mindestens ein Halbbild (A,B) speicherbar ist und an dessen Eingang ein von einem Tuner des Fernsehempfängers empfangenes, im Zeitmultiplex die ersten (A) und die zweiten Halbbilder (B) eines jeden Vollbildes seriell enthaltendes, Videosignal anliegt, wobei dieses Videosignal einem ersten Eingang eines Detektors (110) zugeführt wird, an dessen zweitem Eingang das aus dem Videospeicher (100) ausgelesene und um ein Halbbild verzögerte Videosignal anliegt, wobei im Detektor (110) durch den bildpunktweisen, vertikalen Vergleich der Luminazsignale korrespondierender Zeilen zweier zeitlich aufeinander folgender Halbbilder Differenzsignale gewonnen und daraus Korrekturwerte (k) gebildet werden, <u>dadurch gekennzeichnet, daß</u> die Korrekturwerte einer Korrektureinrichtung (130) zugeführt werden, in der entsprechend den Korrekturwerten der Helligkeitswert jedes Bildpunktes (Pixels) in einem Halbbild an den Helligkeitswert des unmittelbar im gleichen Halbbild benachbarten oberen oder unteren Bildpunktes (Pixels) angeglichen wird.

9. Vorrichtung nach Anspruch 8, dadurch gekennzeichnet, daß die Korrekturwerte (k) vor ihrer Zuführung zur Korrektureinrichtung (130) in einem Korrekturwertspeicher (120) zwischengespeichert werden.

10. Vorrichtung nach Anspruch 8, dadurch gekennzeichnet, daß die Speicherkapazität des Videospeichers (100) derart bemessen ist, daß in diesem mindestens ein Halbbild (A,B) und die vom Detektor (110) gewonnenen Korrekturwerte speicherbar sind.

**11.** Vorrichtung nach Anspruch 8, dadurch gekennzeichnet, daß die vom Detektor (110) gewonnenen Korrekturwerte direkt der Korrektureinrichtung (130) zugeführt werden, und daß das in der Korrektureinrichtung (130) korrigierte Halbbild in einem weiteren Videospeicher (100′) zwi schengespeichert ist, und daß ein Multiplexer (140) vorgesehen ist, der alternierend den Videospeicher (100) und den weiteren Videospeicher (100′) ausliest.

**12.** Vorrichtung nach Anspruch 8, dadurch gekennzeichnet, daß die Speicherkapazität des Videospeichers (100) derart bemessen ist, daß in diesem mindestens zwei Halbbilder (A,B) speicherbar sind und an dessen Eingang ein von einem Tuner des Fernsehempfängers empfangenes, im Zeitmultiplex die ersten (A) und die zweiten Halbbilder (B) eines jeden Vollbildes seriell enthaltendes, Videosignal anliegt, und daß die im Videosignalspeicher (100) zwischengespeicherten ersten (A) und zweiten Halbbilder (B) mit einer Rasterfrequenz von 100 Hz ausgelesen werden und dem Detektor (110) zugeführt werden, in dem durch den bildpunktweisen, zeilenweisen Vergleich der Luminanzsignale korrespondierender Zeilen zweier zeitlich aufeinander folgender Halbbilder das Differenzsignal gewonnen und daraus die entsprechenden Korrekturwerte (k) gebildet werden, die der Korrektureinrichtung (130) zugeführt werden, in der die bildpunktweise Korrektur der auf dem Bildschirm des Fernsehempfängers darzustellenden primären oder sekundären ersten oder zweiten Halbbilder (A,A′, B′,B) erfolgt.

**13.** Vorrichtung nach Anspruch 8 oder 12, dadurch gekennzeichnet, daß in dem Detektor (110) die Luminanzsignale korrespondierender Zeilen zeitlich aufeinanderfolgender Halbbilder über je ein, aus einer Verzögerungsleitung (113) und einem Subtrahierer (114) bestehendes Differenzglied (111, 112) geführt werden, aus deren Ausgangssignalen in einem weiteren Subtrahierer (115) ein Differenzsignal gebildet wird, welches in einer von einer Steuereinrichtung (117) gesteuerten Recheneinrichtung (116) in die Korrekturwerte (k) umgerechnet wird.

**14.** Vorrichtung nach Anspruch 9, dadurch gekennzeichnet, daß die Korrekturwerte (k) des Korrekturspeichers (120) einer nichtlinearen Bewertungsschaltung (135) zugeführt werden, und daß das zu korrigierende Halbbild (A,B bzw. A,A′, B′,B) über einen Datenbus (D4) einer Verzögerungsleitung (131) mit einer Verzögerungszeit von einer Zeile, einem Subtrahenden-Eingang (132′) eines Subtrahierers (132) und dem einen Eingang eines Summierers (134) zugeführt wird, und daß der Ausgang der Verzögerungsleitung (131) mit einem Minuenden-Eingang (132″) des Subtrahierers (132) verbunden ist, und daß das im Subtrahierer (132) gebildete Differenzsignal einem Multiplizierer (133) zugeführt wird, in dem das Differenzsignal mit einem aus der nichtlinearen Bewertungsschaltung (135) stammenden Korrekturfaktor (kf) multipliziert wird, und das Ausgangssignal des Multiplizierers dem anderen Eingang des Summierers (134) zugeführt wird .

## Claims

**1.** A method of reducing edge flicker in a television picture wherein a first field (A), containing all odd-numbered lines of a frame, and a second field (B), containing all even-numbered lines of a frame, are displayed on the screen of a television receiver at twice the repetition rate of the individual fields (A, B) in a vertical-temporal scanning pattern of the field sequence: primary first field (A) in the first scanning pattern, secondary first field (A′) in the second scanning pattern, secondary second field (B′) in the first scanning pattern, and primary second field (B) in the second scanning pattern, wherein to detect the edge flicker, the luminance signal of a line of a primary field (A or B) is compared picture element by picture element with the luminance signal of the vertically following line of the temporally following primary field (B or A), and wherein correction values are derived from the luminance signals of these corresponding lines of the two temporally successive fields (A, B or B, A), characterized in that in accordance with the correction values, the luminance value of each picture element (pixel) in a field is adapted to the luminance value of the adjacent picture element (pixel) toward the top or bottom of the same field.

**2.** A method as claimed in claim 1, characterized in that in the event of a signal step change first occurring in a line of the first field (A), an adaptation of the picture element or elements affected in said line to the luminance value or values of the adjacent picture element or elements toward the bottom of said first field is effected.

**3.** A method as claimed in claim 1, characterized in that in the event of a signal step change first occurring in a line of the first field (A), an adaptation of the picture element or elements affected in said line to the luminance value or values of the adjacent picture element or elements toward the top of said first field is effected.

4. A method as claimed in claim 1, characterized in that on the occurrence of a signal step change first occurring in a line of the second field (B), an adaptation of the picture element or elements affected in said line to the luminance value or values of the adjacent picture element or elements toward the bottom of said second field is effected.

5. A method as claimed in claim 1, characterized in that in the event of a signal step change first occurring in a line of the second field (B), an adaptation of the picture element or elements affected in said line to the luminance value or values of the adjacent picture element or elements toward the top of said second field is effected.

6. A method as claimed in claim 1, characterized in that the correction of the picture elements is dependent on the absolute correction values (k) such that for small absolute correction values, no correction takes place.

7. A method as claimed in claims 1 to 6, characterized in that the correction is performed by an interpolation px of the luminance values p1, p2 of two vertically adjacent picture elements within a field according to the following formula:

$$px = p2 \cdot (1 - kf) + p1 \cdot kf,$$

where the correction value kf lies between 0 and 1 and is determined by linear or nonlinear weighting of the correction values k stored in the correction-value memory (120).

8. An arrangement for carrying out the method claimed in claim 1, comprising a video memory (100) whose capacity is such that at least one field (A, B) is storable therein, and whose input is fed with a video signal from a tuner of the television receiver, said video signal containing the first (A) and second fields (B) of each frame in time-division-multiplexed, serial form, that said video signal is applied to a first input of a detector (110), whose second input receives the video signal read from the video memory (100), which was delayed by one field period, the detector (110) deriving difference signals by the pixel-by-pixel, vertical comparison of the luminance signals of corresponding lines of two temporally successive fields and forming correction values (k) therefrom, characterized in that the correction values are fed to a correction device (130) in which the luminance value of each picture element (pixel) in a field is adapted to the luminance value of the adjacent picture element (pixel) toward the top or bottom of the same field.

9. An arrangement as claimed in claim 8, characterized in that the correction values (k) are temporarily stored in a correction-value memory (120) before being fed to the correction device (130).

10. An arrangement as claimed in claim 8, characterized in that the capacity of the video mencry (100) is such that at least one field (A, B) and the correction values formed by the detector (110) are storable therein.

11. An arrangement as claimed in claim 8, characterized in that the correction values formed by the detector (110) are fed directly to the correction device (130), that the field corrected in the correction device (130) is temporarily stored in a further video memory (100'), and that a multiplexer (140) is provided which alternately reads the contents of the video memory (100) and the further video memory (100').

12. An arrangement as claimed in claim 8, characterized in that the capacity of the video memcry (100) is such that at least two fields (A, B) are storable therein, that the input of the video memory (100) is fed with a video signal from a tuner of the television receiver, said video signal containing the first (A) and second fields (B) of each frame in time-division-multiplexed, serial form, and that the first (A) and second fields (B) temporarily stored in the video memory (100) are read out at a vertical scanning frequency of 100 Hz and fed to the detector (110), in which the difference signal is derived by the pixel-by-pixel, line-by-line comparison of the luminance signals of corresponding lines of two temporally successive fields and converted into the corresponding correction values (k), which are fed to the correction device (130), where the pixel-by-pixel correction of the primary or secondary first or second fields (A, A', B', B) to be displayed on the screen of the television receiver is performed.

13. An arrangement as claimed in claim 8 or 12, characterized in that in the detector (110), the luminance signals of corresponding lines of temporally successive fields are passed through respective difference devices (111, 112) each consisting of a delay line (113) and a subtracter (114), and that in a further subtracter (115) a difference signal is formed from the outputs of said difference devices (111, 112) which is converted into the correction values (k) in a computing device (116) controlled by a controller (117).

14. An arrangement as claimed in claim 9, characterized in that the correction values (k) of the correction-value memory (120) are fed to a nonlinear weighting circuit (135), that the field to be corrected (A, B; A, A′, B′, B) is applied over a data bus (D4) to a delay line (131) providing a delay equal to one line period, to a subtrahend input (132′) of a subtracter (132), and to one input of a summer (134), that the output of the delay line (131) is connected to a minuend input (132″) of the subtracter (132), that the difference signal formed in the subtracter (132) is fed to a multiplier (133) which multiplies it by a correction factor (kf) from the nonlinear weighting circuit (135), and that the output of the multiplier is fed to the other input of the summer (134).

**Revendications**

1. Procédé pour réduire le papillottement des bords d'une image de télévision, selon lequel une première trame (A), qui contient toutes les lignes impaires d'une image, et une seconde trame (B), qui contient toutes les lignes paires d'une image, sont représentées sur un écran du récepteur de télévision avec une fréquence de balayage double de la fréquence verticale des trames individuelles (A,B), dans un canevas de balayage temporel vertical de la séquence de trames : première trame primaire (A) dans le premier canevas de lignes, première trame secondaire (A′) dans le second canevas de lignes, seconde trame secondaire (B′) dans le premier canevas de lignes et seconde trame primaire (B) dans le second canevas de lignes, et selon lequel pour la détection du papillottement des bords, le signal de luminance d'une ligne d'une trame primaire (A ou B) est comparé, point d'image par point d'image, au signal de luminance de la ligne suivante dans le sens vertical de la trame primaire suivante dans le temps (B ou A), et des valeurs de correction sont dérivées de la différence entre les signaux de luminance de ces lignes correspondantes des deux trames successives dans le temps (A, B ou B, A), caractérisé en ce que la valeur de luminosité de chaque point d'image (pixel) d'une trame est rendue égale, conformément aux valeurs de correction, à la valeur de luminosité du point d'image (pixel) supérieur ou inférieur, directement voisin dans la même trame.

2. Procédé suivant la revendication 1, caractérisé en ce que dans le cas d'une variation brusque du signal de luminance, qui apparaît dans le temps tout d'abord sur une ligne de la première trame (A), un réglage du ou des points d'image considérés de cette ligne sur la valeur de luminance du ou des points d'image situés au-dessous est exécuté.

3. Procédé selon la revendication 1, caractérisé en ce que, dans le cas d'une variation brusque du signal de luminance, qui apparaît dans le temps tout d'abord dans une ligne de la première trame (A), un réglage du ou des points d'image considérés de cette ligne sur la valeur de luminance du ou des points d'image situés au-dessus est exécuté.

4. Procédé selon la revendication 1, caractérisé en ce que dans le cas d'une variation brusque du signal de luminance, qui apparaît dans le temps tout d'abord sur une ligne de la seconde trame (B), il se produit un réglage du ou des points d'image considérés de cette ligne sur la valeur de luminance du ou des points d'image situés au-dessous est exécuté.

5. Procédé selon la revendication 1, caractérisé en ce que, dans le cas d'une variation brusque du signal de luminance, qui apparaît dans le temps tout d'abord dans une ligne de la seconde trame (B), un réglage du ou des points d'image considérés de cette ligne sur la valeur de luminance du ou des points d'image situés au-dessus est exécuté.

6. Procédé selon la revendication 1, caractérisé en ce que la correction des points d'image est fixée en fonction de la valeur absolue des valeurs de correction (k) de telle sorte qu'aucune correction n'est exécutée dans le cas de valeurs de correction ayant une faible valeur absolue.

7. Procédé selon les revendications 1 à 6, caractérisé en ce que la correction s'effectue au moyen d'une interpolation px des valeurs de luminance (p1,p2) de deux points d'image voisins dans le sens vertical, à l'intérieur d'une trame, conformément à la formule suivante :

$$px = p2.(1 - kf) + p1.kf,$$

la valeur de correction kf étant comprise entre 0 et 1 et étant déterminée au moyen d'une pondération linéaire ou non linéaire des valeurs de correction k mémorisées dans la mémoire de valeurs de correction (120).

8. Procédé selon la revendication 1, comprenant une mémoire vidéo (100), dont la capacité est dimensionnée de telle sorte qu'au moins une trame (A,B) peut être mémorisée dans cette mémoire et qu'à son entrée peut être appliqué un signal vidéo reçu par un syntoniseur du récepteur de télévision et qui contient en série, selon le multiplex temporel, les premières trames (A) et les secondes trames (B) d'une image, et selon lequel ce signal vidéo est envoyé à une première entrée d'un détecteur (110), à la seconde entrée duquel est appliqué le signal vidéo lu dans la mémoire vidéo (100) et retardé d'une trame, et, dans le détecteur (110), des signaux de différence sont formés au moyen d'une comparaison verticale, en chaque point d'image, des signaux de luminance de lignes correspondantes de deux trames successives dans le temps et que des valeurs de correction (k) sont formées à partir de là, <u>caractérisé en ce que</u> les valeurs de correction sont envoyées à un dispositif de correction (130), dans lequel la valeur de luminosité de chaque point d'image (pixel) dans une trame est compensée, conformément et rendue égale, conformément aux valeurs de correction, à la valeur de luminosité du point d'image (pixel) supérieur ou inférieur, directement voisin dans la même trame.

9. Procédé selon la revendication 8, caractérisé en ce que les valeurs de correction (k) sont mémorisées temporairement dans une mémoire de valeurs de correction (120), avant leur envoi au dispositif de correction (130).

10. Procédé selon la revendication 8, caractérisé en ce que la capacité de la mémoire vidéo (100) est dimensionnée de manière qu'au moins une trame (A,B) et les valeurs de correction délivrées par le détecteur (110) peuvent être mémorisées dans cette mémoire.

11. Procédé selon la revendication 8, caractérisé en ce que les valeurs de correction délivrées par le détecteur (110) sont envoyées directement au dispositif de correction (130), et que la trame, qui est corrigée dans le dispositif de correction (130), est mémorisée temporairement dans une autre mémoire vidéo (100′), et qu'il est prévu un multiplexeur (140), qui lit alternativement la mémoire vidéo (100) et l'autre mémoire vidéo (100′).

12. Procédé selon la revendication 8, caractérisé en ce que la capacité de la mémoire vidéo (100) est dimensionnée de telle sorte qu'au moins deux trames (A,B) peuvent être mémorisées dans cette mémoire et qu'à son entrée est appliqué un signal vidéo qui est reçu par un syntoniseur du récepteur de télévision et contient en série, dans le multiplex temporel, les premières trames (A) et les secondes trames (B) de chaque image, et que les premières trames (A) et les secondes trames (B), qui sont mémorisées temporairement dans la mémoire de signaux vidéo (100), sont lues avec une fréquence de balayage de 100 Hz et sont envoyées au détecteur (110), dans lequel le signal de différence est obtenu au moyen de la comparaison, point d'image par point d'image et ligne par ligne, des signaux de luminance de lignes correspondantes de deux trames successives dans le temps et qu'à partir de là sont formées des valeurs de correction correspondantes (k), qui sont envoyées au dispositif de correction (130), dans lequel est exécutée la correction, point d'image par point d'image, des premières ou secondes trames primaires ou secondaires (A,A′,B′,B), qui doivent être représentées sur l'écran du récepteur de télévision.

13. Procédé selon la revendication 8 ou 12, caractérisé en ce que dans le détecteur (110), les signaux de luminance de lignes correspondantes de trames successives dans le temps sont envoyés respectivement par l'intermédiaire d'un circuit de formation de différence (111,112), qui est constitué par une ligne à retard (113) et un soustracteur (114) et à partir des signaux duquel est formé, dans un autre soustracteur (115), un signal de différence, qui est converti en les valeurs de correction (k), dans un dispositif de calcul (116) commandé par un dispositif de commande (117).

14. Procédé selon la revendication 9, caractérisé en ce que les valeurs de correction (k) de la mémoire de correction (120) sont envoyées à un circuit de pondération non linéaire (135), et que la trame à corriger (A,B ou A,A′,B′,B) est envoyée par l'intermédiaire d'un bus de transmission de données (D4) à une ligne à retard (131) produisant un retard d'une ligne, à une entrée inverseuse (132′) d'un soustracteur (132) et à une entrée d'un additionneur (134), et que la sortie de la ligne à retard (131) est reliée à une entrée non-inverseuse (132″) du soustracteur (132) et que le signal de différence formé dans le soustracteur (132) est envoyé à un multiplicateur (133), dans lequel le signal de différence est multiplié par un facteur de correction (kf), qui est délivré par le circuit de pondération non linéaire (135), et que le signal de sortie du multiplicateur est envoyé à l'autre entrée de l'additionneur (134).

FIG. 1a

FIG. 1b

FIG. 1c

FIG. 1d

FIG. 1e

FIG. 1f

# FIG. 2a

# FIG. 2b

16

FIG. 3a

FIG. 3b

# FIG. 4a

# FIG. 4b

| v | 1A | 1B | 2A | 2B | 3A | 3B | |
|---|---|---|---|---|---|---|---|

| vz1 | | 1A | 1A' | 1B' | 1B | 2A | 2A' | 2B' | 2B | 3A | 3A' | 3B' |
|---|---|---|---|---|---|---|---|---|---|---|---|---|

| vz2 | | 1B | 2A | 2B | 3A | 3B | |

| K | | K1A' | K1B | K2A' | K2B | K3A' | |

FIG. 5

FIG. 6

FIG. 7

FIG. 7'